# EUROPEAN PATENT SPECIFICATION

(11) **EP 3 208 254 B1**
(45) Date of publication and mention of the grant of the patent: **20.05.2020**
(21) Application number: 16382063.2
(22) Date of filing: 17.02.2016
(51) Int. Cl.: C05D 9/02, C05F 11/02, C05G 1/00

(54) **FERTILIZING COMPOSITION WHICH INCLUDES IONS COMPLEXED WITH HUMIC SUBSTANCES TO IMPROVE THE BIOLOGICAL FIXATION OF NITROGEN BY MICROORGANISMS PRESENT IN THE SOIL**
DÜNGUNGSZUSAMMENSETZUNG MIT IONEN, DIE ZUR VERBESSERUNG DER BIOLOGISCHEN FIXIERUNG VON STICKSTOFF DURCH IM BODEN VORHANDENE MIKROORGANISMEN MIT HUMINSTOFFEN KOMPLEXIERT SIND
COMPOSITION FERTILISANTE QUI COMPREND DES IONS COMPLEXÉS AVEC DES SUBSTANCES HUMIQUES POUR AMÉLIORER LA FIXATION BIOLOGIQUE D'AZOTE PAR DES MICRO-ORGANISMES PRÉSENTS DANS LE SOL

(43) Date of publication of application: 23.08.2017
(73) Proprietor: FERTINAGRO BIOTECH, S.L., 44195 Teruel (ES)
(72) Inventor: ATARES REAL, Sergio, 44195 Teruel (ES); ROMERO LOPEZ, Joaquin, 44195 Teruel (ES); COLOM TOMAS, Elena, 44195 Teruel (ES); NARANJO OLIVERO, Miguel Angel, 44195 Teruel (ES); SALAET MADORRAN, Ignasi, 44195 Teruel (ES); FERRER GINES, María, 44195 Teruel (ES)
(74) Representative: González López-Menchero, Álvaro Luis

(56) References cited:
- EP-A2- 0 856 502
- EP-A2- 1 216 976
- EP-A2- 1 612 200
- EP-B1- 0 284 339
- WO-A1-2010/013275
- DE-A1- 4 105 247
- RU-C2- 2 237 643
- US-A- 5 213 692
- US-A- 5 354 350

## Description

The present invention generally relates to a fertilizing composition which includes ions complexed with humic substances to improve the biological fixation of nitrogen by microorganisms present in the soil, in particular nitrogen-fixing microorganisms, thus facilitating the absorption of nitrogen in the form of ammonium derivatives, nitrite and nitrate by the plants.

More specifically, the invention provides a fertilizing composition which includes metallic ions complexed with humic substances, the metal ions consisting in cobalt, iron and molybdenum ions to improve the capacity of the nitrogen-fixing microorganisms present in the soil such as Clostridium, in particular *Clostridium pasteurianum, Rhizobium* and *Azotobacter* to convert atmospheric nitrogen, which is not easily combined with other elements, into metabolites assimilable by the plants and thus increase the quantity of nitrogen assimilable by the plants in the soil, thus improving the growth or development thereof. Fertilizing compositions comprising ions complexed with humic substances are known from EP 1 612 200 A2, US5,213,692 A, DE 41 05 247 A1, US 5,354,350 A and RU 2 237 643 C2.

This fertilizing composition, therefore, not only facilitates the development and growth of the plants, but also constitutes a treatment for the soil, more specifically for the microorganisms present in the soil, similarly allowing the problem of the accumulation of nitrogen in the soil to be combatted and reducing the need to fertilize the soil with nitrogenous fertilizers.

The growth of all plants is determined directly or indirectly by the availability of mineral nutrients, in particular nitrogen. Once the needs for water have been covered, the most significant limiting factor is nitrogen. A plant with nitrogen deficiency would suffer from chlorosis, exhibiting a yellowish coloration of the stalks and leaves, lack of development and weakness. On the contrary, when the plant has sufficient nitrogen, the leaves and stalks thereof grow quickly. In agriculture, nitrogen is the principal nutrient for the growth of plants and thus, the yields of harvests with soil lacking nitrogen are low.

Nitrogen is an element essential for the growth of all microorganisms. Nitrogen is present in the atmosphere in the form of N₂ in approximately 80 %, however, due to the strength of the bond between the two nitrogen atoms, the reactivity of nitrogen is practically zero, which means that it is not assimilable by the majority of living organisms.

The nitrogen atoms are thus in continuous movement, they are slowly displaced between the air, land, water and living or dead organisms. This uninterruptible closed cycle is called the cycle of nitrogen. The stability of nitrogen makes the combination with other elements difficult and therefore, it is difficult for organisms to assimilate and requires a large quantity of energy to be combined with other elements. However, there is a group of microorganisms which are capable of utilizing this nitrogen by way of the process known as biological fixation of nitrogen and which, in general, consists of the conversion of atmospheric nitrogen into metabolizable forms which can be assimilated by living beings, in particular ammonium, nitrite and nitrate forms.

All the microorganisms capable of carrying out biological fixation of nitrogen do this owing to the activity of the enzymatic complex, Nitrogenase. Nitrogenases are oxidoreductase enzymes which catalyze oxidoreduction type reactions, specifically the reduction of molecular nitrogen; being of particular significance for plants since the nitrogen fixation process takes place in the latter, converting it into easily assimilable ammonium. In general, nitrogenases are formed by two components (Chan, Michael K.; Jongsun, Kim Rees, D. C., The Nitrogenase FeMo-Cofactor and P--Cluster Pair: 2.2 Å Resolution Structures, Science, 260, 792-794, 1993):
- The protein Fe-M, wherein the metal (M) may be molybdenum, vanadium or iron. It is a α2β2 tetramer formed by 30 iron atoms and two of the corresponding metal, distributed in two types of clusters: the cubic or "P" type packages (8Fe, 7S²⁻) and the Fe-M cofactor.
- The solely iron protein, sensitive to oxygen, only contains 4Fe4S type clusters as well as two MgATP binding sites.

The nitrogenases are found in bacteria such as *Clostridium pasteurianum, Rhizobium* and Azotobacterias. *Rhizobium* bacteria are found in the roots of legumes such that the nitrogen fixation is carried out in the nodules thereof; the bacteria degenerate there into bacteroides and into a special hemoglobin called leghemoglobin which traps the oxygen, protecting the nitrogenase and providing this to the rest of the plant.

Cobalt is a precursor coenzyme of leghemoglobin, an enzyme which maintains the anaerobic conditions in the environment of the nitrogenase. A cobalt deficiency inhibits the synthesis of leghemoglobin, which would cause an excessive oxygen flow, deactivating the nitrogenase (Biologia de las plantas, Volume 2. Peter H. Raven, Ray F. Evert, Susan E. Editorial Reverte).

There are various environmental factors which limit the fixation of nitrogen. For example, nodulation is affected by the excess or lack of determined mineral elements. A deficiency of molybdenum negatively influences the fixation of nitrogen. Another mineral element is iron, which, however, when it is scarce, does not have a direct effect on the fixation of nitrogen. Iron and molybdenum are constituent elements of nitrogenase, it is for this reason that the presence of both elements is essential for the proper functioning of the enzyme.

The nitrogen-fixing microorganisms may end up being a solution to the environmental problem of the nitrification of soil, proof of this is the fact that there are various studies and patents related to the activation of the same, for example the US patent 2004/0241847, wherein genetically-modified microorganisms are used to increase the nitrogenase activity of the microorganisms.

The fertilizing composition object of the invention thus includes cobalt, iron and molybdenum ions complexed with humic substances to improve the capacity of nitrogen-fixing microorganisms present in the soil, such as *Clostridium pasteurianum, Rhizobium* and *Azotobacter* to convert atmospheric nitrogen into metabolites assimilable by the plants and thus increase the quantity of nitrogen assimilable by the plants in the soil, thus improving the growth or development thereof.

Fertilizing compositions are known from the prior art which comprise bioactive agents, in particular microorganisms which facilitate the growth of plants. For example, in US 20140352376, an NPK fertilizing composition is described which includes a carrier coated with a mixture of bacteria selected from among the genus Bacillus, Pseudomonas and Streptomyces and wherein the mixture of bacteria is covered with the carrier in a proportion of 10⁶ to 10¹¹ CFU per gram of carrier.

The objective of the present invention is to provides a fertilizing composition which includes cobalt, iron and molybdenum ions complexed with humic substances to improve the capacity of nitrogen-fixing microorganisms present in the soils, such as *Clostridium pasteurianum, Rhizobium* and *Azotobacter* to convert atmospheric nitrogen, which is not easily combined with other elements, into metabolites assimilable by the plants and thus increase the quantity of nitrogen assimilable by the plants in the soil, thus improving the growth or development thereof.

In the present invention, the term "fertilizing composition" relates to any organic or inorganic composition, natural or synthetic, both in solid state or liquid state, which provides the plants with one or a number of the nutritive elements essential for the normal plant development thereof, normally primary macroelements (N, P, K), secondary macroelements (Ca, Mg, S) and microelements (B, CI, Co, CU, Fe, Mn, Mo and Zn). The term "fertilizing composition" encompasses, in particular, simple mineral fertilizers (contained in only one of the following macroelements: nitrogen, phosphorous or potassium) and complex mineral fertilizers (contained in more than one of the following macroelements: nitrogen, phosphorous or potassium), organic fertilizers, organo-mineral fertilizers, etc., such as P fertilizers, K fertilizers, N fertilizers, NP fertilizers, PK fertilizers, NK fertilizers, or NPK fertilizers.

The fertilizing composition includes cobalt, iron and molybdenum ions complexed with humic substances.

Humic acids are complex macromolecular groupings which form part of the organic material of the soil and which improve the absorption of macronutrients, thus stimulating the plant growth. The extraction, characterization and properties of humic acids are described, for example in documents US3398186 A, US3544296 A or EP0284339 B1.

In this respect, it must be indicated that not all of the humic acids have the same complexation capacities, therefore in the present invention these humic acids are modified in order to acquire this capacity, this characteristic being distinguishing from the rest of conventional humic acids. The humic acids are thus modified in order to strengthen those functional groups of the same that aid the complexation, particularly the carboxylate and aromatic ester groups, increasing the concentration of these groups.

For example, in order to obtain humic acids originating from leonardite, a double extraction is carried out. The first extraction is carried out by adding potash to an aqueous solution of a leonardite with known characteristics. The second extraction is carried out in an acidic medium, adjusted by the addition of sulfuric acid to a pH of between 0 and 2, thus meaning that the humic substances precipitate. Lastly, the humic substances are redissolved by adding potassium carbonate and pyrophosphate up to a pH of approximately 10.

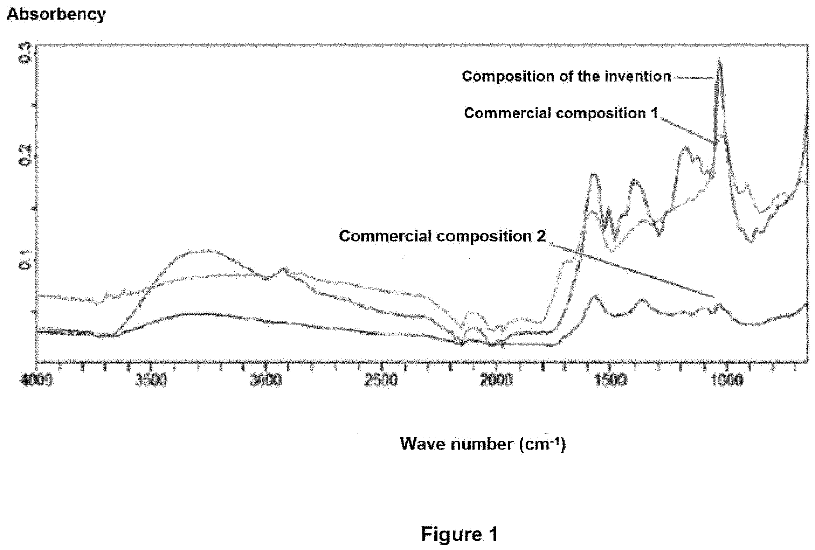

An infrared spectrum is shown in Figure 1 which shows the differences between the modified humic acids and others existing on the market. This test was carried out with three different samples, two products already existing on the market (commercial composition 1 and commercial composition 2) and the one corresponding to the invention, all of which in solid state, using an Agilent Carry 630 FTIR Spectrometer device at ambient temperature and atmospheric pressure. The same quantity was weighed from each one of the samples and deposited on the ATR diamond crystal of the equipment, detecting the vibration frequencies typical for each one of the functional groups of the humic acid in a range between 4000 cm-1 and 650 cm-1. Once the spectrums of each one of the samples were obtained, and with the aim of comparing the results, the spectrums were superimposed in order to thereby obtain the spectrum of Figure 1.

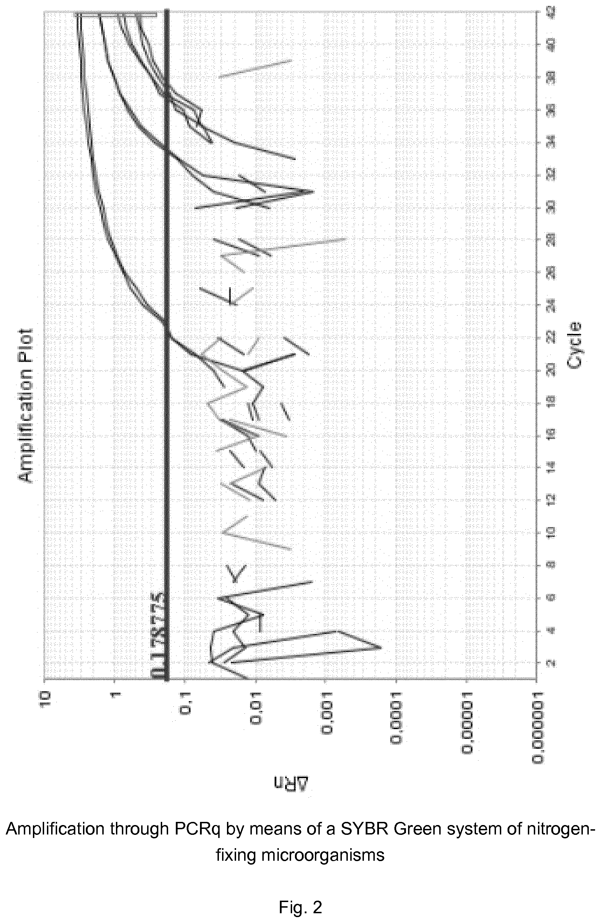

A graphic of the PCR fluorescence amplification obtained with a SYBR Green detection system is shown in Fig. 2.

As can be observed in the spectrum of Figure 1, the peaks which appear at 1400 and at 1010 cm-1 corresponding to the carboxylate and aromatic ester groups imply a concentration clearly above these complexing groups in the humic acids used here. As has already been mentioned, these are responsible for the complexation, therefore, the greater concentration of these, the greater the complexation capacity.

The concentration of cobalt, iron and molybdenum metallic ions complexed with humic substances present in the composition is found in the range fluctuating between 0.01 % and 50 % by weight with respect to the total weight of the composition.

The concentration of cobalt, iron and molybdenum ions complexed with humic substances present in the fertilizing composition is the one shown in the following Table 1, expressed in percentage by weight with respect to the total weight of the fertilizing composition:

**Table 1**

| | Concentration (w/w) |
|---|---|
| Mo | 0.01 % - 20 % |
| Co | 0.01 % - 20 % |
| Fe | 0.01 % - 50 % |

A test was carried out in order to study the growth and the development of microorganisms with the capacity to fix the nitrogen in order to verify that the addition of the fertilizing composition according to the invention involves growth of nitrogen-fixing microorganisms present in the soil (*Clostridium pasteurianum, Rhizobium* and *Azotobacter*). To this end, cultures were prepared containing, in each case, soil, an excess of sugars in order to avoid the carbon source being a limiting factor and the fertilizing composition of the invention. A control culture was also prepared including the same soil and the same concentration of sugars, but without the fertilizing composition of the invention. The cultures were prepared in a culture chamber under agitation and at a control temperature for a period of 3 to 5 days.

A sample of these cultures was collected both at the time of the preparation thereof and following the cultivation during the time cited and a comparative analysis was carried out of the number of microorganisms with nitrogenase activity by means of PCR in real-time. The results are shown in Figure 2.

As is observed in Figure 2, it can be verified that there is a greater quantity of microorganisms with capacity to fix nitrogen in the samples where the fertilizing composition of the invention is added. First fluorescence curves between the cycles 22-23 can thus be observed, which correspond to the final test sample which contains the fertilizing composition of the invention, indicating a greater number of microorganisms with nitrogenase enzymatic activity than the sample which does not contain the composition, it being interpreted using the curves that appear in cycle 33. The analysis of the samples initially collected in the test was in turn carried out, both the sample without the composition of the invention, curves of cycle 38, and with the composition, which corresponds to the curves around cycle 37. The significance which the addition of fertilizer has in the growth of microorganisms with the sought enzymatic activity is thus reflected. In the control samples, the growth of nitrogen-fixing microorganisms is lower, fluorescence curves in cycle 36. The 4 last curves, cycles 36-38, are the initial test samples. The tests were carried out in duplicate.

In the following Table 2, the results are indicated in Cts for each one of the amplification curves of the tests.

**Table 2**

| | Ct over time | | | |
|---|---|---|---|---|
| | **Initial time (0 h)** | | **Final time (120 h)** | |
| Control sample | 37.26 | 37.84 | 33.45 | 33.62 |
| Sample with the fertilizing composition of the invention | 36.67 | 36.93 | 23.11 | 22.87 |

## Claims

1. An N, P, K, NP, NK, PK or NPK type fertilizing composition, **characterized in that** it includes metallic ions complexed with humic substances, the metal ions consisting in cobalt, iron and molybdenum, to improve the capacity to biologically fix nitrogen by nitrogen-fixing microorganisms present in the soil and increase the absorption of the nitrogen in the form of ammonium derivatives, nitrite and nitrate by the plants.

2. The fertilizing composition according to claim 1, **characterized in that** the nitrogen-fixing microorganisms belong to the genera *Clostridium, Rhizobium* and *Azotobacter.*

3. The fertilizing composition according to claim 1, **characterized in that** the concentration of cobalt, iron and molybdenum ions complexed with humic substances present in the composition is found in the range which fluctuates between 0.01 % and 50 % by weight with respect to the total weight of the composition.

4. The fertilizing composition according to claim 3, **characterized in that** the concentration of cobalt ions complexed with humic substances present in the composition is found in the range of 0.01 % - 20 % by weight with respect to the total weight of the composition.

5. The fertilizing composition according to claim 3, **characterized in that** the concentration of molybdenum ions complexed with humic substances present in the composition is found in the range of 0.01 % - 20 % by weight with respect to the total weight of the composition.

6. The fertilizing composition according to claim 3, **characterized in that** the concentration of iron ions complexed with humic substances present in the composition is found in the range of 0.01 % - 50 % by weight with respect to the total weight of the composition.

## Patentansprüche

1. Düngemittelzusammensetzung des Typs N, P, K, NP, NK, PK oder NPK, **dadurch gekennzeichnet, dass** diese Metallionen einschließt, die mit Huminstoffen komplexiert sind, wobei die Metallionen aus Kobalt, Eisen und Molybdän bestehen, um die Fähigkeit zur biologischen Fixierung von Stickstoff durch im Boden vorhandene stickstofffixierende Mikroorganismen zu verbessern und die Absorption des Stickstoffs in Form von Ammoniumderivaten, Nitrit und Nitrat durch die Pflanzen zu erhöhen.

2. Düngemittelzusammensetzung nach Anspruch 1, **dadurch gekennzeichnet, dass** die stickstofffixierenden Mikroorganismen zu dem Geschlecht *Clostridium, Rhizobium* und *Azotobacter* gehören.

3. Düngemittelzusammensetzung nach Anspruch 1, **dadurch gekennzeichnet, dass** die Konzentration von Kobalt-, Eisen- und Molybdänionen, die mit in der Zusammensetzung vorhandenen Huminstoffen komplexiert sind, in dem Bereich liegt, der zwischen 0,01 Gew.-% und 50 Gew.-% in Bezug auf das Gesamtgewicht der Zusammensetzung schwankt.

4. Düngemittelzusammensetzung nach Anspruch 3, **dadurch gekennzeichnet, dass** die Konzentration von Kobaltionen, die mit in der Zusammensetzung vorhandenen Huminstoffen komplexiert sind, in dem Bereich liegt, der zwischen 0,01 Gew.-% und 20 Gew.-% in Bezug auf das Gesamtgewicht der Zusammensetzung vorgefunden wird.

5. Düngemittelzusammensetzung nach Anspruch 3, **dadurch gekennzeichnet, dass** die Konzentration von Molybdänionen, die mit in der Zusammensetzung vorhandenen Huminstoffen komplexiert sind, in dem Bereich liegt, der zwischen 0,01 Gew.-% und 20 Gew.-% in Bezug auf das Gesamtgewicht der Zusammensetzung vorgefunden wird.

6. Düngemittelzusammensetzung nach Anspruch 3, **dadurch gekennzeichnet, dass** die Konzentration von Eisenionen, die mit in der Zusammensetzung vorhandenen Huminstoffen komplexiert sind, in dem Bereich liegt, der zwischen 0,01 Gew.-% und 50 Gew.-% in Bezug auf das Gesamtgewicht der Zusammensetzung vorgefunden wird.

## Revendications

1. Composition fertilisante de type N, P, K, NP, NK, PK ou NPK, **caractérisée en ce qu'**elle comporte des ions métalliques complexés avec des substances humiques, les ions métalliques constitués de cobalt, de fer et de molybdène, pour améliorer la capacité à fixer biologiquement l'azote par les microorganismes de fixation d'azote présents dans le sol et pour augmenter l'absorption de l'azote sous forme de dérivés d'ammonium, de nitrite et de nitrate par les plantes.

2. Composition fertilisante selon la revendication 1, **caractérisée en ce que** les microorganismes de fixation d'azote appartiennent aux genres *Clostridium, Rhizobium* et *Azotobacter.*

3. Composition fertilisante selon la revendication 1, **caractérisée en ce que** la concentration en ions de cobalt, de fer et de molybdène complexés avec des substances humiques présentes dans la composition se situe dans la plage qui varie entre 0,01 % et 50 % en poids par rapport au poids total de la composition.

4. Composition fertilisante selon la revendication 3, **caractérisée en ce que** la concentration en ions de cobalt complexés avec des substances humiques présentes dans la composition se situe dans la plage de 0,01 % à 20 % en poids par rapport au poids total de la composition.

5. Composition fertilisante selon la revendication 3, **caractérisée en ce que** la concentration en ions de molybdène complexés avec des substances humiques présentes dans la composition se situe dans la plage de 0,01 % à 20 % en poids par rapport au poids total de la composition.

6. Composition fertilisante selon la revendication 3, **caractérisée en ce que** la concentration en ions de fer complexés avec des substances humiques présentes dans la composition se situe dans la plage de 0,01 % - 50 % en poids par rapport au poids total de la composition.
